Europäisches Patentamt

European Patent Office

Office européen des brevets

(19)

(11) Numéro de publication: **0 328 431**
**A1**

## (12) DEMANDE DE BREVET EUROPEEN

(21) Numéro de dépôt: **89400235.1**

(22) Date de dépôt: **27.01.89**

(51) Int. Cl.⁴: **C 04 B 22/06**
C 04 B 28/04

(30) Priorité: **08.02.88 FR 8801430**

(43) Date de publication de la demande:
**16.08.89 Bulletin 89/33**

(84) Etats contractants désignés:
**AT BE CH DE ES FR GB GR IT LI LU NL SE**

(71) Demandeur: **LAFARGE FONDU INTERNATIONAL**
**157 avenue Charles de Gaulle**
**F-92521 Neuilly sur Seine Cedex (FR)**

(72) Inventeur: **Mathieu, Alain**
**22 Avenue du Cardinal de Retz**
**F-78600 Maisons-Laffitte (FR)**

(74) Mandataire: **Hirsch, Marc-Roger**
**Cabinet Hirsch 34 rue de Bassano**
**F-75008 Paris (FR)**

(54) Procédé et composition pour accélerer la prise des ciments et supprimer les efflorescences.

㊐ La présente invention a pour objet un procédé et une composition pour accélérer la prise du ciment Portland, raccourcir la phase de migration des ions calcium dans la phase liquide et complexer la chaux réactive du ciment Portland.

Elle est caractérisée en ce que ladite composition est essentiellement formée des constituants suivants: un matériau à base d'aluminates de calcium et de l'alumine trihydratée.

EP 0 328 431 A1

Bundesdruckerei Berlin

**Description**

## PROCEDE ET COMPOSITION POUR ACCELERER LA PRISE DES CIMENTS ET SUPPRIMER LES EFFLORESCENCES.

La présente invention a pour objet un procédé pour accélérer la prise des ciments Portland et supprimer l'apparition d'efflorescences dues à la carbonatation de la Portlandite. Elle se rapporte également à une composition pour accélérer la prise des ciments Portland et supprimer l'apparition desdites efflorescences sur les surfaces formées de béton, mortiers ou enduits. En fait elle se rapporte tout particulièrement à l'application de cette composition pour la formation de mortiers ou d'enduits de façades.

Il est connu que les ciments Portland en s'hydratant libèrent de la chaux éteinte dénommée Portlandite, qui est susceptible de se carbonater rapidement. La formation de la Portlandite est due à la réaction d'hydratation soit des silicates tricalciques $3CaO, SiO_2$, soit des silicates bicalciques $2CaO, SiO_2$ (représentés selon la nomenclature cimentière par les formules respectives $C_3S$ ou $C_2S$). Cette réaction d'hydratation conduit à la formation de Portlandite $Ca(OH)_2$ qui apparaît dès les premières heures de l'hydratation et est abondante dès l'échéance de 24 heures.

Le processus d'hydratation est régi par l'équation générale:

$$3CaO, SiO_2 + 3H_2O \longrightarrow (1,5\text{-}2)CaO, SiO_2, H_2O + (1,5\text{-}1)Ca(OH)_2$$

ou, selon la nomenclature cimentière (dans laquelle $CaO = C$, $SiO_2 = S$ et $H_2O = H$)

$$C_3S + 3H \longrightarrow {}_{(1,5\text{ à }2)}SH + (1,5\text{ à }1)CH$$

Cette Portlandite $Ca(OH)_2$, lorsque certaines conditions de températures et d'hygrométrie sont réunies, se carbonate rapidement en provoquant l'apparition d'efflorescences à la surface des bétons, mortiers et enduits. En effet, la carbonatation et l'apparition des efflorescences se produisent principalement par temps froid et humide. L'humidité permet une migration de la chaux à la surface, ce qui la rend très sensible à la carbonatation. Les températures extérieures sont également un facteur favorable, car il est bien connu que le froid retarde la prise des liants hydrauliques ce qui permet, si les conditions d'hygrométrie sont réunies, aux ions calcium de migrer en phase liquide, vers la surface du matériau.

Cette carbonatation est, en fait, produite par la réaction de la chaux avec l'anhydride carbonique atmosphérique

$$Ca(OH)_2 + CO_2 \longrightarrow CaCO_3 + H_2O$$

$Ca(OH)_2$ est très réactive, ce qui la rend très sensible à la carbonatation par réaction avec le $CO_2$ atmosphérique, ce qui donc entraîne à la surface des ouvrages des différences de coloration peu esthétiques.

La présente invention a pour objet un procédé et une composition permettant d'empêcher cette formation d'efflorescences, et donc d'éviter la production de plages de carbonation peu esthétiques à la surface formées de bétons, de mortiers ou d'enduits.

Le procédé selon l'invention propose d'accélérer la prise du ciment Portland, pour raccourcir la phase de migration des ions calcium dans la phase liquide et de complexer la chaux réactive du ciment Portland par adjonction au ciment Portland d'une composition, contenant un matériau à base d'aluminates de calcium et de l'alumine trihydratée, composition formée par cobroyage poussé des deux constituants, jusqu'à l'obtention d'une finesse telle que 85% des particules présente une dimension inférieure à 44 μ. En fait, le refus au tamis de 44 μ est inférieur à 15%.

Selon une autre forme d'exécution de la composition selon l'invention, le matériau à base d'aluminates de calcium employé à titre de constituants présente une teneur en $Al_2O_3$ combinée comprise entre 35 et 72% et donc une teneur en aluminates de calcium comprise entre 35 et 98%.

La proportion d'alumine trihydratée dans ladite composition est, de préférence, comprise entre 40 et 70%.

L'alumine trihydratée peut être obtenue par voie chimique ou consister en un trihydrate naturel.

De préférence, la composition contient un ou plusieurs adjuvants régulateurs de rhéologie; ces adjuvants consistent, de préférence, en carbonate de sodium ou en citrate trisodique.

Les aluminates de calcium peuvent être obtenus à partir de bauxites ou d'alumine chimique issue du précédé Bayer, par exemple.

Selon une forme d'exécution de l'invention, la proportion de ladite composition dans le ciment Portland est comprise entre 5 et 40% exprimés en proportions pondérales.

La présente invention a également pour objet une composition permettant d'accélérer la prise de ciment Portland, de raccourcir la phase de migration des ions calcium dans la phase liquide et de complexer la chaux réactive libérée lors de l'hydratation du ciment Portland, ladite composition étant essentiellement formée des constituants suivants: un matériau à base d'aluminates de calcium et de l'alumine trihydratée, et la finesse de ses constituants étant telle que 85% de la composition passe au tamis de 44 μ.

En fait, cette composition finement broyée accélère la prise des ciments Portland et complexe la Portlandite réactive libérée lors de l'hydratation pour former des hydrates complexes de type $3CaO, Al_2O_3, 6H_2O$ ou $4CaO, Al_2O_3, nH_2O$ (soit $C_3AH_6$ ou $C_4AH_n$ selon la nomenclature cimentière) qui se produit instantanément dès que $Ca(OH)_2$ apparaît.

De préférence, la proportion d'alumine trihydratée dans ladite composition est comprise entre 40 et 70%, et la proportion de matériau à base d'aluminates de calcium présente une teneur en $Al_2O_3$ combinée de 35 à 72%, et donc une teneur en aluminates de calcium comprise entre 35% et 98%.

En fait la composition selon la présente invention a pour but:

- d'accélérer la prise du ciment Portland
- de donner lieu à une réaction de l'alumine avec la chaux hydratée au fur et à mesure de la formation de cette dernière

de sorte que la migration des ions Ca+ en phase liquide vers la surface, migration qui normalement est la source des efflorescences, soit empêchée.

La composition selon la présente invention est donc tout particulièrement destinée à la formation de mortiers ou d'enduits de façades.

L'état de la technique en la matière ne concerne ni une telle composition ni une telle application. Il en est ainsi de FR-A-2 295 928 qui prévoit contrairement au procédé de l'invention un traitement à chaud et prise et durcissement sous atmosphère de dioxyde de carbone et dont seule une fraction formée de silice présente une finesse inférieure à 50 μ. Il en est ainsi également de DE-A-2 518 799 qui concerne un liant à prise rapide dont la granulométrie n'est pas définie et qui peut contenir un halogénoaluminate de calcium.

D'autres buts et avantages de l'invention apparaîtront à la lecture de la description suivante donnée à titre illustratif et nullement limitatif. Sauf indications contraires, les proportions sont indiquées en proportions pondérales.

Les mesures de détermination de la présence de chaux éteinte $Ca(OH)_2$ sont effectuées par analyse thermodifférentielle et examen des produits d'hydratation des pâtes de ciment pouvant être complété par l'étude des spectres de diffraction par rayons X.

Les ciments Portland employés dans les exemples 1 à 4 sont des ciments de type CPA, contenant au moins 97% de clinker, sulfate de calcium non compris (selon la norme française NFP 15301) et dans l'exemple 5 de type CPJ, ciment dont la teneur en clinker est d'au moins 65% (sulfate de calcium non compris), le reste étant constitué de un ou plusieurs constituants tels que laitier de haut fourneau, pouzzolanes, cendres volantes, filler calcaire (selon la norme française NFP 15301). Par le terme "aluminates de calcium", on entend tout matériau contenant des aluminates de calcium.

EXEMPLE 1

Un mélange de 38% d'aluminate de calcium ayant la composition suivante:

| | |
|---|---|
| . $Al_2O_3$ combinée | 70,4% |
| . CaO | 28,6% |
| . $SiO_2$ | 0,8% |
| . $TiO_2$ | 0,1% |
| . $FeO_3$ + FeO | 0,1% |

et 62% d'alumine trihydratée issue du procédé Bayer, c'est-à-dire contenant 100% d'$Al(OH)_3$ est cobroyé dans un broyeur à boulets. Le temps de broyage est ajusté pour que la finesse du mélange final soit telle que le refus au tamis de 44% soit inférieur à 15%. 23% du mélange ainsi obtenu, formant la composition selon l'invention sont mélangés à 77% du ciment Portland contenant au moins 97% de clinker ayant la composition suivante:

| | |
|---|---|
| . $SiO_2$ | 22,65% |
| . $FeO_3$ | 0,26% |
| . $Al_2O_3$ | 2,95% |
| . CaO | 67,32% |
| . MgO | 0,54% |
| . $SO_3$ | 2,51% |
| . $CO_2$ | 0,77% |
| . P.F. | 1,07% |
| . $K_2O$ | 0,70% |
| . $Na_2O$ | 0,26% |

La composition minéralogique de ce clinker de ciment Portland est la suivante:

| | |
|---|---|
| . $3CaO, SiO_2$ ($C_3S$) | 53,3% |
| . $2CaO, SiO_2$ ($C_2S$) | 24,6% |
| . $3CaO, Al_2O_3$ ($C_3A$) | 7,4% |
| . $4CaO, Al_2O_3$ ($C_4AF$) | 0,8% |
| . composés mineurs | 13,9% |

On prépare un mortier de sable siliceux contenant une partie du mélange de ciment Portland et de la composition ainsi obtenue à deux parties de sable et on mesure la prise du mortier à l'aide de la méthode à l'aiguille VICAT; on obtient les résultats suivants pour un rapport eau/liant de 0,4.

- Temps de prise:

| | |
|---|---|
| . début de prise | 14 mn |
| . fin de prise | 19 mn |
| - Résistance mécaniques en compression à l'échéance de 30 minutes | 1,3 MPa |

En fait, l'examen par analyse thermodifférentielle sur la pâte pure du ciment constituée de 23% du mélange du matériau à base d'aluminate de calcium et de l'alumine hydratée et de 77% du ciment Portland précité, gâchés avec 20% d'eau, ne montre aucune présence de $Ca(OH)_2$ à l'échéance de deux heures et à l'échéance de 24 heures après le gâchage.

EXEMPLE 2

Cet exemple est mis en oeuvre sur les mêmes matériaux que ceux employés dans l'exemple 1 mais employés dans les proportions suivantes, à savoir 40% du mélange d'aluminate de calcium et d'alumine trihydratée et de 60% de ciment Portland.

Les tests réalisés suivant les mêmes procédures que celles définies dans l'exemple 1 ont donné les résultats suivants:

- prise:

| | |
|---|---|
| . début | 6 mn |
| . fin | 9 mn |
| - résistance en compression à 30 minutes | 2,1 MPa |

De même façon, l'analyse thermodifférentielle n'a pas montré la présence de $Ca(OH)_2$ aux échéances de 2 heures et de 24 heures après gâchage.

## EXEMPLE 3

On opère sur les mêmes matériaux que ceux utilisés dans les exemples 1 et 2 mais en ajoutant les adjuvants régulateurs de rhéologie suivants:

| | |
|---|---|
| . carbonate de sodium | 0,3% |
| . citrate trisodique | 0,20% |

Les tests réalisés dans les mêmes conditions que dans les exemples 1 et 2 ont conduit aux résultats suivants:

- prise:

| | |
|---|---|
| . début | 15 mn |
| . fin | 19 mn |
| - résistance à la compression à l'échéance de 2 heures | 5,8 MPa |

L'analyse thermodifférentielle n'a pas permis de détecter de trace de Portlandite à l'échéance de 2 heures et de 24 heures après le gâchage.

## EXEMPLE 4

Un mélange de 42% d'aluminates de calcium ayant la composition suivante:

| | |
|---|---|
| . $Al_2O_3$ combinée | 39,0% |
| . CaO | 37,5% |
| . $SiO_2$ | 4,3% |
| . $TiO_2$ | 2,8% |
| . $Fe_2O_3 + FeO$ | 16,4% |

et de 58% de bauxite trihydratée sèche du type bauxite australienne de Weipa ayant la composition suivante:

| | |
|---|---|
| . trihydrate d'alumine | 61,9% |
| . monohydrate d'alumine | 14,9% |
| . impuretés | 23,2% |

est cobroyé à une finesse telle que le refus au tamis de 44 μ soit inférieur à 15%.25% du mélange ainsi obtenu, formant la composition selon l'invention, est mélangé à 75% d'un ciment Portland dont la composition chimique est la suivante:

| | |
|---|---|
| . $SiO_2$ | 23,78% |
| . $Fe_2O_3$ | 2,22% |
| . $Al_2O_3$ | 2,71% |
| . CaO | 66,78% |
| . MgO | 0,81% |
| . $SO_3$ | 2,02% |
| . $CO_2$ | 0,36% |
| . P.F. | 0,89% |
| . $K_2O$ | 0,31% |
| . $Na_2O$ | 0,12% |

La composition minéralogique du clinker de ciment Portland est la suivante:

| | |
|---|---|
| . $3CaO, SiO_2$ ($C_3S$) | 62,1% |
| . $2CaO, SiO_2$ ($C_2S$) | 21,9% |
| . $3CaO, Al_2O_3$ ($C_3A$) | 3,4% |
| . $4CaO, Al_2O_3, Fe_2O_3$ ($C_4AF$) | 6,8% |
| . composés mineurs | 5,8% |

On ajoute alors 0,5% de citrate trisodique exprimé par rapport à la somme pondérale de ladite composition et du ciment Portland.

On prépare un mortier de sable contenant une partie du mélange de ladite composition, du ciment précité et du citrate trisodique dans les proportions précitées avec deux parties de sable et mesure les propriétés suivantes:

- prise:

| | |
|---|---|
| . début | 60 mn |

- résistance:

| | |
|---|---|
| . à 6 heures | 4,5 MPa |
| . à 24 heures | 16 MPa |

L'analyse thermodifférentielle ne révèle aucune trace de Portlandite $Ca(OH)_2$ aux échéances de 2 heures et de 24 heures après gâchage.

## EXEMPLE 5

Un mélange de 42% d'aluminates de calcium ayant la composition suivante:

| | |
|---|---|
| . $Al_2O_3$ combiné | 50,5% |
| . CaO | 37,6% |
| . $SiO_2$ | 5,1% |
| . $TiO_2$ | 2,6% |
| . $FeO_3 + FeO$ | 2,5% |
| . composés mineurs | 1,7% |

et de 58% de trihydrate d'alumine Bayer à 100% d'$Al(OH)_3$ est cobroyé afin que la finesse du broyage soit telle que 85% du mélange passe au tamis de 44 μ.18% du mélange ainsi obtenu formant une composition selon l'invention est mélangé à 82% du ciment Portland contenant au maximum 35% d'un filler calcaire. La composition chimique du ciment Portland sans filler calcaire est la suivante:

. $SiO_2$                       26,37%
. $Fe_2O_3$                      1,68%
. $Al_2O_3$                      4,75%
. $CaO$                         56,84%
. $MgO$                          1,60%
. $SO_3$                         2,79%
. $CO_2$                         1,53%
. P.F.                          3,12%
. $K_2O$                         0,85%
. $Na_2O$                        0,47%

La composition minéralogique des clinkers du ciment Portland est la suivante:

. $3CaO, SiO_2$                          60,3%
. $2CaO, SiO_2$                          24 %
. $3CaO, Al_2O_3$                        5,9%
. $4CaO, Al_2O_3, Fe_2O_3$               2,3%
. composés mineurs                       7,5%

Les propriétés hydrauliques déterminées sur un mortier formé d'une partie du mélange de ladite composition et du ciment Portland précités et de deux parties de sable sont les suivantes:

- début de prise                 30 mn
- résistance
mécaniques:

. à 6 heures                     4,8 MPa
. à 24 heures                    12 MPa

Aucune trace de $Ca(OH)_2$ n'est détectée par analyse thermodifférentielle aux échéances de 2 heures et de 24 heures.

Bien entendu, la présente invention n'est pas limitée aux modes de réalisation décrits et représentés, mais elle est susceptibles de nombreuses variantes accessibles à l'homme de l'art sans que l'on ne s'écarte de l'esprit de l'invention.

**Revendications**

1.- Procédé pour accélérer la prise du ciment Portland, raccourcir la phase de migration des ions calcium dans la phase liquide et complexer la chaux réactive libérée lors de l'hydratation du ciment Portland, caractérisé en ce qu'il consiste à ajouter au ciment Portland une composition contenant un matériau à base d'aluminates de calcium et de l'alumine trihydratée, ladite composition étant formée par cobroyage poussé des deux constituants jusqu'à l'obtention d'une finesse telle que 85% des particules présente une dimension inférieure à 44 μ.

2.- Procédé selon la revendication 1, caractérisé en ce que le matériau à base d'aluminates de calcium présente une teneur en $Al_2O_3$ combinée de 35 à 72%, et donc une teneur en aluminates de calcium comprise entre 35 et 98%.

3.- Procédé selon la revendication 1, caractérisé en ce que la proportion d'aluminates de calcium dans ladite composition est comprise entre 30 et 60%.

4.- Procédé selon la revendication 1 ou 2, caractérisé en ce que la proportion de ladite composition dans le ciment Portland est comprise entre 5 et 40% exprimés en proportions pondérales.

5.- Procédé selon une quelconque des revendications 1 à 4, caractérisé en ce que l'alumine trihydratée peut être obtenue par voie chimique ou consister en un trihydrate naturel.

6.- Procédé selon une quelconque des revendications 1 à 5, caractérisé en ce que les aluminates de calcium peuvent être obtenus à partir de bauxites ou d'alumine chimique.

7.- Procédé selon une quelconque des revendications 1 à 6, caractérisé en ce que ladite composition contient des adjuvants régulateurs de rhéologie.

8.- Composition permettant d'accélérer la prise de ciment Portland, de raccourcir la phase de migration des ions calcium dans la phase liquide et de complexer la chaux réactive libérée lors de l'hydratation du ciment Portland, caractérisée en ce qu'elle est essentiellement formée des constituants suivants: un matériau à base d'aluminates de calcium et de l'alumine trihydratée et en ce que cette composition est telle que 85% de ses constituants passe au tamis de 44 μ.

9.- Composition selon la revendication 8, caractérisée en ce que le matériau à base d'aluminates de calcium présente une teneur en $Al_2O_3$ combinée de 35 à 72%, et donc une teneur en aluminates de calcium comprise entre 35 et 98%.

10.- Composition selon l'une des revendications 8 ou 9, caractérisée en ce que la proportion d'alumine trihydratée dans ladite composition est comprise entre 40 et 70%.

11.- Composition selon une quelconque des revendications 8 à 10, caractérisée en ce qu'elle contient des adjuvants régulateurs de rhéologie.

12.- Composition selon la revendication 10, caractérisée en ce que lesdits adjuvants consistent en carbonate de sodium ou en citrate trisodique.

13.- Composition selon une quelconque des revendications 8 à 12, caractérisée en ce que l'alumine trihydratée peut être obtenue par voie chimique ou consister en un trihydrate naturel.

14.- Composition selon une quelconque des revendications 8 à 13, caractérisée en ce que les aluminates de calcium peuvent être obtenus à partir de bauxites ou d'alumine chimique.

15.- Application de la composition selon une quelconque des revendications 8 à 14, à la formation de mortiers ou d'enduits de façades.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 295 928 (MATSUSHITA ELECTRIC WORKS, LTD) * Revendications 1,3,9,11,15,17,28,31; page 4, paragraphe 3; page 9, paragraphe 1; tableau II * --- | 1-15 | C 04 B 22/06 C 04 B 28/04 |
| Y | DE-A-2 518 799 (P.O. GUTFLEISCH) * Revendications 1,13; page 5, lignes 25-29 * --- | 1-15 | |
| A | CHEMICAL ABSTRACTS, vol. 108, no. 6, 8 février 1988, page 331, résumé no. 42947t, Columbus, Ohio, US; & CS-A-238 504 (S. SLANICKA et al.) 01-11-1987 --- | 1-15 | |
| A | CHEMICAL ABSTRACTS, vol. 103, no. 24, décembre 1985, page 264, résumé no. 200105v, Columbus, Ohio, US; & CS-A-221 789 (S. SLANICKY) 15-05-1985 --- | 1-15 | |
| A | GB-A-2 063 240 (LAFARGE FONDU INTERNATIONAL) * Revendications 1-6; page 1, lignes 31-35; exemple 1 * ----- | 1-15 | DOMAINES TECHNIQUES RECHERCHES (Int. Cl.4) C 04 B 22/00 C 04 B 28/00 C 04 B 7/00 C 04 B 14/00 |

Le présent rapport a été établi pour toutes les revendications

| Lieu de la recherche | Date d'achèvement de la recherche | Examinateur |
|---|---|---|
| LA HAYE | 03-04-1989 | HAUCK, H.N. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)